# EUROPEAN PATENT APPLICATION

(11) **EP 3 805 183 A1**
(43) Date of publication of application: **14.04.2021**
(21) Application number: 19810684.1
(22) Date of filing: 24.05.2019
(51) Int. Cl.: C04B 35/03, C04B 35/636, C04B 35/64, B28B 1/00, B33Y 10/00, B33Y 70/00

(54) **COMPOSITION FOR FDM 3D PRINTERS**

(30) Priority: 31.05.2018 KR 20180062297
(71) Applicant: Bioalpha Corporation, Seoul 06170 (KR)
(72) Inventor: LIM, Jun Young, Seoul 06920 (KR); KIM, Yong Bok, Gwangju-si, Gyeonggi-do 12777 (KR); SEO, Jun Hyuk, Hanam-si, Gyeonggi-do 13014 (KR); RYU, Hyun Seung, Yongin-si, Gyeonggi-do 16894 (KR)
(74) Representative: dompatent von Kreisler Selting Werner - Partnerschaft von Patent- und Rechtsanwälten mbB
(86) International application number: PCT/KR2019/006274
(87) International publication number: WO 2019/231179

(57) **Abstract**

The present invention relates to a paste-type composition for a fused deposition modeling (FDM) 3D printer comprising: a ceramic powder including CaO and SiO₂; and a binder solution, wherein the composition may be injected into the FDM 3D printer in the form of a paste to rapidly manufacture a molded article without a melting process and may precisely implement a variety of geometries to be utilized as a biological replacement for medical use.

## Description

### [Technical Field]

This application claims the benefit of priority based on Korean Patent Application No. 10-2018-0062297 filed on May 31, 2018, the entire contents of which are incorporated by reference.

The present invention relates to a composition for a fused deposition modeling (FDM) 3D printer, and more specifically, to a composition for a FDM 3D printer which is bio-transplantable and may be formed into a variety of geometries by using a ceramic as a main ingredient.

### [Background Art]

In recent years, the use of 3D printers which can form a three-dimensional product to have the same shape as an object by using the 3D data about the object is increasing. In particular, since a complex structured product can be easily formed and manufactured according to its planned design, the market for 3D printers is expected to grow very large in the future.

In general, 3D printing technology is basically based on a three-dimensional digital model. The three-dimensional digital model is generated by CAD or acquired by digital scanners. The 3D printing method is divided into a total of seven methods, which are a photopolymerization (PP) method, a material extrusion (ME) method, a binder jetting (BJ) method, and a material jetting (MJ) method, a direct energy deposition (DED) method, a powder bed fusion (PBF) method, and a sheet lamination (SL) method, respectively.

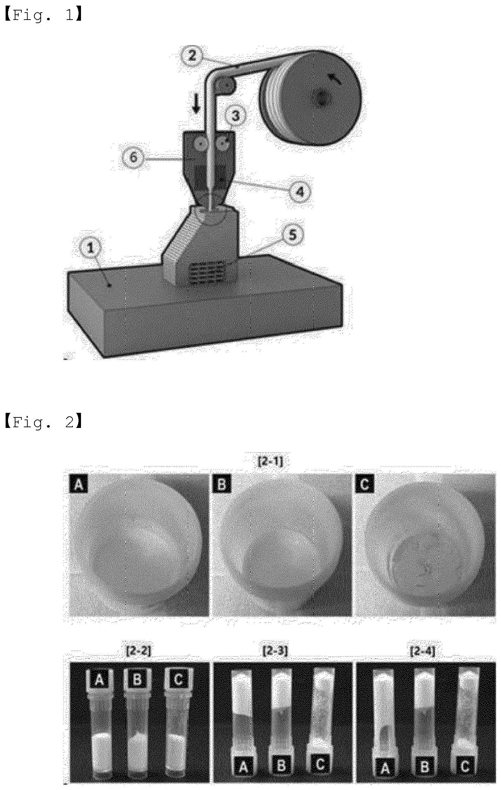

A fused direct deposition (FDM), which is a commonly used representative 3D printing method, belongs to the material jetting method, which is a method of applying a high temperature heat to a solid filament and injecting it in a molten state through a nozzle. Fig. 1 is a drawing for illustrating a FDM 3D printing method of the prior art. Referring to Fig. 1, the filament(2) in the solid state is continuously supplied to the nozzle(6) by the rotation of the roll(3). In order to inject the filament(2) in the solid state, the filament in the solid state must be melted, and to this end, a heating member(4) is disposed inside the nozzle(6). The melted and injected material is laminated on the upper of the work table(1) to form a molded article(5) .

Since such a FDM 3D printing method of the prior art requires a time for melting the filament in the solid state, the time required for printing is long. In addition, since the inner center of the filament in the solid state does not melt completely unlike the outer side, it causes the injection failure.

A ceramic material with high biocompatibility and stiffness must be used as a raw material of the FDM 3D printer for *in vivo* transplantation, but there are difficulties that it takes more time to melt the filaments in the solid state including the ceramic by the FDM 3D printing method of the prior art as described above, and the injection failure problem also occurs more frequently.

On the other hand, with respect to the material including a ceramic, Korean Patent Registration No. 1801964 discloses a composition for a 3D laminate printer using a synthetic resin and a ceramic powder and which relates to a composition for a 3D laminate printer consisting of a synthetic resin and a modified zirconia powder. Korean Patent Registration No. 1610218 discloses a complex filament composition for a FDM type 3D printer and relates to a complex filament composition for a FDM type 3D printer consisting of a synthetic resin and a metal powder.

However, in the process of 3D printing a composition containing a high-strength component such as ceramic, the prior art does not solve the problems that it takes a long time for printing due to a long melting time and the injection failure also occurs frequently. Therefore, the prior art still has limitations in the case of mixing a variety of ceramic components or manufacturing 3D molded articles exclusively made of ceramics, and also a biotransplant with high strength and good biocompatibility is required in personalized medical/dental/biotechnological fields but is insufficient to meet.

In order to use a ceramic material in the FDM 3D printing method, there is an urgent need to develop the ceramic material for FDM 3D printing that can solve the injection failure problem, be printed quickly, and precisely implement a variety of geometries so as to be applied to medical/dental/biotechnological fields.

### [Prior Art Documents]

### [Patent Documents]

(Patent Document 1) Korean Patent Registration No. 1801964, Composition for 3D Laminate Printer Using Synthetic Resin and Ceramic Powder.
(Patent Document 2) Korean Patent Registration No. 1610218, Complex Filament Composition for FDM Type 3D Printer Containing Metal Powder

### [Disclosure]

### [Technical Problem]

In order to solve the above problems, after many years of research, the present inventors have developed a composition for a FDM 3D printer which can be printed rapidly using a ceramic material without a melting process. The present inventors have discovered that since the composition for the FDM 3D printer prepared by including CaO and SiO₂ and mixing a binder solution therewith had a paste form having fluidity, flowability, and viscosity, it could be rapidly manufactured into a 3D molded article of a ceramic material without the melting process and could precisely implement a variety of geometries.

Therefore, it is an object of the present invention to provide a composition for a FDM 3D printer which can be easily injected, rapidly manufactured into a molded article of a ceramic material without the melting process, and precisely implement a variety of geometries so as to be applied to medical/dental/biotechnological fields.

### [Technical Solution]

According to a first aspect of the present invention, the present invention provides a paste-type composition for a FDM 3D printer, which is used to be injected into the FDM 3D printer in the form of a paste and inject a molded article, wherein the composition for the FDM 3D printer comprises a ceramic powder including CaO and SiO₂; and a binder solution.

In an embodiment of the present invention, the ceramic powder further includes one selected from the group consisting of MgO, CaF₂, P₂O₅, B₂O₃, and a combination thereof.

In an embodiment of the present invention, the CaO is included in an amount of 20 to 60% by weight, based on the total weight of the ceramic powder.

In an embodiment of the present invention, the SiO₂ is included in an amount of 15 to 40% by weight, based on the total weight of the ceramic powder.

In an embodiment of the present invention, the P₂O₅ is included in an amount of 6 to 20% by weight, based on the total weight of the ceramic powder.

In an embodiment of the present invention, the mixing ratio of the ceramic powder and the binder solution is 3:7 to 9:1 by weight.

In an embodiment of the present invention, the binder solution includes a binder and a solvent, wherein the binder is selected from the group consisting of sugars, gelatine, dibasic calcium phosphate, corn (maize), starch, pregelatinized starch, acacia, xanthan gum, tragacanth, gelatine, alginic acid, polyethylene glycol, polyvinyl alcohol, polyvinylcaprolactam, polymethacrylates, polyvinylpyrrolidone (PVP),
polyvinylpyrrolidone-vinyl acetate (PVP-VA),
polyvinylcaprolactam-polyvinyl acetate-polyethylene glycol, methacrylic acid-ethyl acrylate, polyvinyl acetate, hydroxypropyl methylcellulose (HPMC), methyl cellulose, ethyl cellulose, hydroxypropyl cellulose (HPC), hydroxyethyl cellulose (HEC), sodium carboxymethyl cellulose, and a combination thereof.

In an embodiment of the present invention, the solvent is selected from the group consisting of water, C₁ to C₄ alcohol, and a combination thereof.

In an embodiment of the present invention, the binder is cellulose series and is contained in an amount of 0.5 to 5% by weight, based on the total weight of the binder solution.

According to a second aspect of the present invention, the present invention provides a molded article manufactured by the composition for the FDM 3D printer as described above.

In an embodiment of the present invention, the molded article is manufactured by injecting the composition for the FDM 3D printer by the FDM 3D printer, and then subjecting the injected composition to a sintering process, wherein the sintering process comprises the steps of: heating the injected material to 800 to 1200 °C; holding the final heating temperature for 160 to 200 minutes; and cooling the heated material to 10 to 35 °C after the holding step.

In an embodiment of the present invention, the heating step is the step of heating the injected material at a rate of 0.01 to 0.8 °C/min.

In an embodiment of the present invention, the cooling step is the step of cooling the heated material at a rate of -0.8 to -0.01 °C/min.

### [Advantageous Effects]

The composition for the FDM 3D printer according to the present invention can be easily injected, rapidly manufactured into a molded article of a ceramic material without a melting process, and precisely implement in a variety of geometries so as to be applied to medical/dental/biotechnological fields.

In addition, a molded article with a high strength can be manufactured using the composition for the FDM 3D printer according to the present invention.

### [Description of Drawings]

Fig. 1 is a drawing for illustrating a FDM 3D printing method of the prior art.
Fig. 2 is an image confirming the viscosity of the compositions of the Example and Comparative Examples.
Fig. 3 is an image of a FDM 3D printer used in Experimental Example 2.
Fig. 4 is an image in which the compositions of the Example and Comparative Example were printed by the FDM 3D printer.
Fig. 5 is an image of the molded articles in which the sintering process was completed.

### [Best Mode]

The present invention relates to a composition for a FDM 3D printer, which is supplied to the FDM 3D printer in the form of a paste having fluidity, flowability, and viscosity, wherein the composition for the FDM 3D printer comprises a ceramic powder including CaO and SiO₂; and a binder solution.

Fused deposition modeling (FDM) 3D printer includes currently commercially available FDM 3D printer and fused filament fabrication (FFF) 3D printer, and refers to a 3D printer that manufactures a three-dimensional molded article by injecting and laminating raw materials without a melting process. However, the commercially available FDM and FFF 3D printers use filaments in the solid state as raw materials, but the composition for the FDM 3D printer according to the present invention is in the form of a paste having fluidity, flowability, and viscosity. That is, the composition for the FDM 3D printer according to the present invention may be applied to the commercially available FDM and FFF 3D printers, since any 3D printing equipment capable of injection may be applied regardless of its name.

The ceramic powder means a material which has biocompatibility, and thus can be transplanted into biological tissues and used in the medical and biotechnological fields, and generally includes an inorganic material or an oxidized inorganic material as a main ingredient.

The ceramic powder includes CaO and SiO₂. In addition, the ceramic powder may further include one selected from the group consisting of MgO, CaF₂, P₂O₅, B₂O₃, and a combination thereof, and MgO, CaF₂, P₂O₅, and B₂O₃ may be added in consideration of required properties of the biotransplant site.

The CaO is a material that is easy to fuse with other ceramic ingredients and contributes to the fluidity, durability, and water resistance of the entire composition, and the CaO is included in an amount of preferably 20 to 60% by weight, more preferably 40 to 50% by weight, based on the total weight of the ceramic powder, but is not limited thereto. When the CaO is less than 20% by weight based on the total weight of the ceramic powder, the effect of lowering the durability and water resistance of the 3D molded article may be exhibited, and when the CaO is more than 60% by weight based on the total weight of the ceramic powder, there are problems that the brittleness of the 3D molded article is increased, or the fluidity of the entire composition is lowered, and thus the composition is unevenly discharged upon 3D printing.

Meanwhile, the SiO₂ is a material that contributes to transparency, viscosity, durability, low fusion temperature, and stabilization of the entire composition, and the SiO₂ is included in an amount of preferably 15 to 40% by weight, more preferably 30 to 40% by weight, based on the total weight of the ceramic powder, but is not limited thereto. When the SiO₂ is used in an amount within the above range, it may improve the bioactivity and achieve excellent glass crystallization.

For the use as a tooth restoration or replacement and a bone replacement, the ceramic powder may further include P₂O₅ to increase bioactivity, and more preferably may further include MgO, CaF₂, P₂O₅, and B₂O₃, but is not limited thereto.

In this case, the MgO may increase the durability against thermal denaturation, and the MgO is preferably 3 to 10% by weight, more preferably 5 to 7% by weight, based on the total weight of the ceramic powder, but is not limited thereto.

The CaF₂ may serve as a fusing agent, and when the raw materials are mixed and heat treated, it can promote fluidity, assist in the formation of a glass phase, and enhance chemical durability. The CaF₂ is preferably 5% by weight or less, more preferably 2% by weight or less, based on the total weight of the ceramic powder, but is not limited thereto.

The P₂O₅ may inhibit the propagation of bacteria such as *Streptococcus mutans* to increase the bioactivity. In particular, it is an ingredient which is contained in a large amount in natural teeth or bones, and may form a glass matrix and improve permeability. The P₂O₅ is preferably 6 to 20% by weight, more preferably 12 to 16% by weight, based on the total weight of the ceramic powder, but is not limited thereto. When the content of P₂O₅ is less than 6% by weight based on the total weight of the ceramic powder, the effect of inhibiting bacterial propagation and the effect of forming a glass matrix are weak, and when the content of P₂O₅ is more than 20% by weight, the brittleness becomes high to cause a problem.

The B₂O₃ may improve glass crystallization to further increase mechanical strength and thermal expansion rate. The B₂O₃ is preferably 1% by weight or less, more preferably 0.5% by weight or less, based on the total weight of the ceramic powder, but is not limited thereto.

The binder solution binds the fine ceramic powders to each other to give aggregation and viscosity, while imparting fluidity and flowability to the composition for the FDM 3D printer to facilitate injection. That is, when the composition for the FDM 3D printer of the present invention uses a binder solution to maintain the paste form, or the composition for the FDM 3D printer has the paste form, the shape is likely to collapse or deform after the injection is completed by the FDM 3D printer, and the shape is likely to collapse or crack even in the subsequent sintering process of gradually raising the temperature.

These problems could be solved by adjusting the binder solution to be mixed with the ceramic powder. As a specific example, the binder solution may include a binder and a solvent.

The binder may be selected from the group consisting of sugars, gelatine, dibasic calcium phosphate, corn (maize), starch, pregelatinized starch, acacia, xanthan gum, tragacanth, gelatine, alginic acid, polyethylene glycol, polyvinyl alcohol, polyvinylcaprolactam, polymethacrylates, polyvinylpyrrolidone (PVP), polyvinylpyrrolidone-vinyl acetate (PVP-VA), polyvinylcaprolactam-polyvinyl acetate-polyethylene glycol, methacrylic acid-ethyl acrylate, polyvinyl acetate, hydroxypropyl methylcellulose (HPMC), methyl cellulose, ethyl cellulose, hydroxypropyl cellulose (HPC), hydroxyethyl cellulose (HEC), sodium carboxymethyl cellulose, and a combination thereof, may be preferably selected from the group consisting of cellulose series such as hydroxypropyl methylcellulose (HPMC), methyl cellulose, ethyl cellulose, hydroxypropyl cellulose (HPC), hydroxyethyl cellulose (HEC), sodium carboxymethyl cellulose, and a combination thereof in order to facilitate the bonding of CaO and SiO₂ powders, and may be more preferably selected from the group consisting of cellulose series such as hydroxypropyl methylcellulose, but is not limited thereto.

Hydroxypropyl methylcellulose is mixed with a solvent to be described below to easily control the fluidity and viscosity of the composition for the FDM 3D printer. In addition, the hydroxypropyl methylcellulose can be easily sintered in the sintering process after 3D printing, and the sintering may be performed slowly so as not to damage the injected form of the molded article.

The hydroxypropyl methylcellulose is preferably 0.5 to 5% by weight, based on the total weight of the binder solution, but is not limited thereto. When the hydroxypropyl methylcellulose is less than 0.5% by weight based on the total weight of the binder solution, the ceramic powders are not easily mixed and combined with each other, or the fluidity of the composition for the FDM 3D printer is increased to make it difficult to maintain the shape of the molded product after injection, and when it is more than 5% by weight, it may not all be removed during the sintering process to lower the durability of the 3D molded article.

The solvent may be selected from the group consisting of water, C₁ to C₄ alcohol, and a combination thereof, preferably a mixed solvent of water and ethanol, but is not limited thereto.

The mixing ratio of the ceramic powder and the binder solution may be 3:7 to 9:1 by weight, preferably 5:5 to 7:3 by weight, but is not limited thereto. When the mixing ratio of the ceramic powder and the binder solution is used within the above range, the fluidity and flowability may be improved upon injection of the composition for the FDM 3D printer to facilitate the injection, while it may be viscous so that the laminated shape can be fixed and maintained after injection. In addition, it is possible to manufacture a molded article having a high-strength precise shape by maintaining the shape as it is even in the sintering process.

Accordingly, since the mixing ratio of the ceramic powder and the binder solution affects the viscosity and fluidity of the composition for the FDM 3D printer, the ease of injection of the composition for the FDM 3D printer can be increased by using the above mixing ratio, and pore spaces between each of the injected one-dimensional layers can be decreased to enhance completeness of the final three-dimensional molded article. Therefore, a three-dimensional molded article, in which a variety of geometries is precisely implemented, may be manufactured to be applied to the medical/dental/biotechnological fields.

Referring to a specific example of manufacturing a molded article with a FDM 3D printer using the composition for the FDM 3D printer of the present invention as a raw material, first, a heterogeneous ceramic powder including CaO and SiO₂ is mixed to be uniformly dispersed in a first container. After a binder is added to a solvent in a second container, the binder is mixed to be dissolved in the solvent phase. The ceramic powder from the first container is added to the second container and mixed slowly to obtain a paste-type composition for a FDM 3D printer.

In order to supply the composition for the FDM 3D printer, which is a raw material, to the FDM 3D printer, a conduit line was installed. Since the composition for the FDM 3D printer of the present invention has a paste form, the conduit line was connected to the nozzle of the FDM 3D printer. Since the composition for the FDM 3D printer is in the form of a paste, a melting process for applying a separate heat is unnecessary, and thus the heating device is not operated at the nozzle.

The FDM 3D printer manufactures a molded article by injecting and laminating the composition for the FDM 3D printer one by one. Wherein the 3D printing process is to manufacture a three-dimensional product by continuously stacking in a layer-by-layer method, and may be used to manufacture 3D molded articles having complex shapes and fine sizes. The injection is carried out in a nozzle mounted on a three-dimensional transport device which is position-controlled in three directions of XYZ. The three-dimensional transport device is free to move along the path calculated from the three-dimensional program, and process variables such as printing speed and nozzle position may be controlled in real time by the three-dimensional program. The composition for the FDM 3D printer is laminated one by one on the work table while creating a two-dimensional planar shape by injection, and a product, that is, a molded article, having a three-dimensional shape can be manufactured.

The molded article injected by the FDM 3D printer becomes a finally finished molded article through the sintering process. Sintering is a process of enhancing the inherent strength and hardness of the ceramic by heating the injected molded article to 800 to 1000 °C to evaporate and oxidize the solvent and binder remaining in the molded article.

The sintering temperature may be variously changed in consideration of the inherent glass transition temperature according to the kind of ceramic powder. However, since the composition for the FDM 3D printer according to the present invention is in the form of a paste, the injected molded article contains a large amount of a solvent and a binder, and thus must be subjected to a sintering process which gradually increases the temperature and must maintain the injected form without cracks as it is in the sintering process.

For example, the sintering process may comprise the steps of: heating the injected material to 800 to 1200 °C; holding the final heating temperature for 160 to 200 minutes; and cooling the heated material to 10 to 35 °C after the holding step. The heating step in the sintering process preferably heats the injected material at a rate of 0.01 to 0.8 °C/min. The drastic temperature change results in the drastic evaporation and oxidation of the binder solution, which prevent maintaining the injected form of the final molded article to cause cracks and pore spaces, thereby significantly lowering the strength. In addition, the cooling step in the sintering process preferably cools the heated material at a rate of -0.8 to -0.01 °C/min. When the temperature is cooled to more than -0.8 °C per minute, cracks or pore spaces occur, and thus the strength is significantly lowered.

The final heating temperature in the sintering process affects the strength of the final molded article, and it is preferable to be sintered at 800 to 1200 °C for use as a biological hard tissue replacement. When the final heating temperature is less than 800 °C, the compressive strength decreases to 560 N or less, thereby making it impossible to be used as a hard tissue replacement. When the final heating temperature is more than 1200 °C, cracks may occur.

Hereinafter, preferred examples are provided to help understanding of the present invention. However, it will be apparent to those skilled in the art that the following examples are only for illustrating the present invention and various changes and modifications can be made within the category and the scope of technical idea of the present invention, and it is also obvious that such changes and modifications fall within the scope of the appended claims.

### [Mode for Carrying out the Invention]

The compositions for the FDM 3D printer were prepared with the composition as shown in Table 1 below.

**[Table 1]**

| Classification | Ingredient | Example 1 | Example 2 | Comparative Example 1 | Comparative Example 2 |
|---|---|---|---|---|---|
| Ceramic powder | CaO | 25.8 | 34 | 8. 6 | 34.4 |
| | SiO₂ | 21 | 26 | 7 | 28 |
| | P₂O₅ | 8.4 | - | 2.8 | 11.2 |
| | MgO | 3. 6 | - | 1.2 | 4.8 |
| | CaF₂ | 1. 02 | - | 0.34 | 1.36 |
| | B₂O₃ | 0.18 | - | 0.06 | 0.24 |
| Binder solution | HPMC | 1.2 | 1.2 | 2.4 | 0.4 |
| | Ethanol | 12 | 12 | 24 | 6 |
| | Water | 26.8 | 26.8 | 53.6 | 13.6 |
| Comments | The numerical values in the table above refer to the weight percentage relative to the total weight percentage of the composition for the FDM 3D printer. | | | | |

### <Example 1>

First, CaO, SiO₂, P₂O₅, MgO, CaF₂, and B₂O₃ in a dry powder state were placed in a container according to the contents as described in Table 1 and mixed to prepare a ceramic powder. HPMC was added to a mixed solvent of ethanol and water prepared according to the contents as described in Table 1 in another container, and then mixed to prepare a binder solution.

The ceramic powder was put into the container containing the binder solution and mixed. As a result, a paste-type composition for FDM 3D printer having fluidity, flowability, and viscosity was prepared.

### <Example 2>

A composition for a FDM 3D printer was manufactured in the same manner as in Example 1, except that P₂O₅, MgO, CaF₂, and B₂O₃ were not used and only CaO and SiO₂ were used, as a ceramic powder. In addition, the content of the binder solution is 40% by weight, which is the same as in Example 1.

### <Comparative Example 1>

A composition for a FDM 3D printer was manufactured in the same manner as in Example 1, except that as described in Table 1, the content of the binder solution was increased to 80% by weight and the content of the ceramic powder was decreased to 20%.

### <Comparative Example 2>

A composition for a FDM 3D printer was manufactured in the same manner as in Example 1, except that as described in Table 1, the content of the binder solution was decreased to 20% by weight and the content of the ceramic powder was increased to 80%.

### Experimental Example 1: Viscosity

The shape to be manufactured is made by laminating the composition for the FDM 3D printer in several layers one by one. Therefore, viscosity is required to maintain a constant injected shape. In order to confirm the viscosity of the Example and Comparative Examples, the experiment was carried out as described below.

Fig. 2 is an image confirming the viscosity of the compositions of the Example and Comparative Examples. Referring to Fig. 2, each of Example (B), Comparative Example 1 (A), and Comparative Example 2 (C) was placed in the same container as shown in Fig. 2-1, and then a portion thereof was taken and transferred to a flask as shown in Fig. 2-2.

Next, the flask was turned upside down as shown in Fig. 2-3 to confirm the viscosity, and the image after 1 minute of turning the flask upside down is shown in Fig. 2-4. In the case of Comparative Example 2 (see C), the ceramic powders were not completely bonded to each other to form the powder state, and after 1 minute from the time of turning the flask upside down, their original shape was not maintained and most of them fell to the bottom of the flask. In the case of Comparative Example 1 (see A), after 1 minute of turning the flak upside down, a portion flowed along the inner wall of the flask. However, in the case of the Example (see B), it was confirmed that even after 1 minute from the time of turning the flask upside down, their original shape was maintained to have viscosity that could be used in the FDM 3D printer. It was shown that since Examples 1 and 2 were identical in the content of the binder solution, they had the same result as in B of Fig. 2.

### Experimental Example 2: 3D Printing

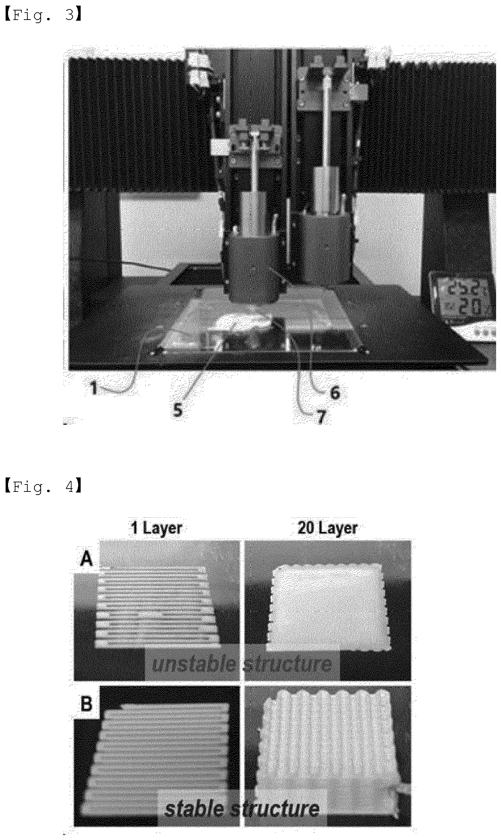

The molded articles were injected through a FDM 3D printer using the Examples and the Comparative Examples as raw materials. A self-made FDM 3D printer was used as the FDM 3D printer (see Fig. 3), and the nozzle was not equipped with a separate heating device. The compositions of the Examples and the Comparative Examples were filled in the nozzle(6), and the compositions of the Examples and the Comparative Examples were injected through a injection port(7) and laminated on the upper surface of the work table(1) to manufacture the molded article(5) .

In Comparative Example 2, injection from the FDM 3D printer was impossible. The compositions of Examples 1 and 2 and Comparative Example 1 were used to be printed by the FDM 3D printer, and the results were as shown in Fig. 4. Referring to Fig. 4, in the case of Comparative Example 1 (see A), since the more the composition was laminated in multiple layers, the more the composition of the upper layer flowed down or collapsed, it is impossible to manufacture a molded article. In the case of Example 1 (see B), the composition did not flow down or collapse in the injected 1 layer as well as in the state in which 20 layers were laminated, and a molded article having a precise geometry was manufactured. Example 2 showed the same result as in Example 1, and Examples 1 and 2 did not cause an injection failure upon injection by the self-made FDM 3D printer.

### Experimental Example 3: Sintering and Compressive Strength of Molded Article

In order to replace hard tissue defects, the molded article must have strength, and the molded article manufactured by the FDM 3D printer is provided with strength by evaporating and burning the binder solution through the sintering process. Example 1, which was 3D printed in Experimental Example 2, was sintered under the conditions as shown in Table 2 below.

**[Table 2]**

| Sintering Process 1 | | Sintering Process 2 | | Sintering Process 3 | |
|---|---|---|---|---|---|
| Temperature Range | Time (minute) | Temperatu re Range | Time (minute) | Temperatu re Range | Time (minute) |
| 0 → 600 °C | 720 | 0 → 600 °C | 720 | 0 → 600 °C | 720 |
| 600 °C (Holding) | 60 | 600 °C (Holding) | 60 | 600 °C (Holding) | 60 |
| 600 → 1000 °C | 800 | 600 → 1000°C | **400** | 600 → 1000 °C | 800 |
| 1000 °C (Holding) | 180 | 1000 °C (Holding) | 180 | 1000 °C (Holding) | 180 |
| 1000 → 600 °C | 800 | 1000 → 20 °C | 980 | **1000 → 20 °C** | **980** |
| 600 °C (Holding) | | | | | |
| 600 → 20 °C | 720 | | | | |
| No cracks, compressive strength of 2,129 N | | Breakage due to occurrence of multiple cracks | | Occurrence of fine cracks | |

The difference between sintering process 1 and sintering processes 2 and 3 is that sintering process 2 doubled the temperature rise width per time (minute) from 600 °C to 1000 °C, while sintering process 3 reduced the temperature drop width per time (minute) to 980 minutes from 1000 °C to 20 °C.

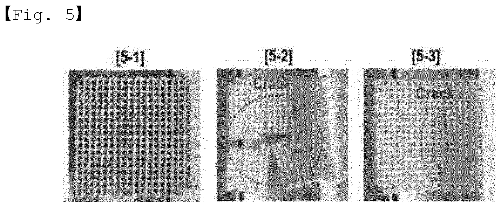

Fig. 5 is an image of a state in which the molded article of Example 1 has been sintered through sintering processes 1 to 3. Referring to Fig. 5, in the molded article manufactured through sintering process 2, it could be confirmed that a large number of cracks occurred and most of them were broken (see Fig. 5-2). Some fine cracks were found in the molded article manufactured through sintering process 3 (see Fig. 5-3). It could be confirmed that cracks were not found in the molded article manufactured through sintering process 1, and the laminated shape upon injection was maintained as it is.

In order to confirm the correlation between the final heating temperature change and the compressive strength in sintering process 1, after the sintering was performed by changing the final heating temperature in the rising temperature range of from 600 to 1000 °C, to from 600 to 800 °C and from 600 to 900 °C, respectively, the measured results of each compressive strength were shown in Table 3. That is, it was carried out similarly to the conditions of sintering process 1 in Table 2, except that the final heating temperatures were changed.

**[Table 3]**

| | | | |
|---|---|---|---|
| Final heating temperature | 1000 °C | 900 °C | 800 °C |
| Compressive strength (N) | 2,129 | 900 | 668 |

Biotransplant materials to replace cranial bone defects must have a compressive strength of at least 560 N to be available as a product. It could be confirmed that when the final heating temperature in the conditions of sintering process 1 is 800 °C, the molded article according to the present invention had a compressive strength of 668 N, and thus was suitable as a biotransplant material for replacing cranial bone defects. In addition, even when the final heating temperature was 900 °C, the compressive strength showed 900 N. On the other hand, it could be confirmed that in sintering process 1 which was carried out at the final heating temperature of 1000 °C, the compressive strength is drastically increased to 2,129N, and thus it was suitable as a biotransplant material for replacing hard tissue defects in all sites of the human body.

The composition for the FDM 3D printer according to the present invention can be used in orthopedic artificial bones, artificial joints, oral and maxillofacial bones, cranial bones, or dental artificial tooth roots, and the like, and be utilized as a disk-shaped artificial bone that can be utilized for spondylodesis, or an artificial bone that is used for facial reconstruction.

As such, the composition for the FDM 3D printer according to the present invention can be easily injected, rapidly manufactured into a molded article of a ceramic material without melting process, and precisely implement a variety of geometries so as to be applied to medical/dental/biotechnological fields. In addition, a molded article with a high strength can be manufactured using the composition for the FDM 3D printer according to the present invention.

## Claims

1. A paste-type composition for a fused deposition modeling (FDM) 3D printer, which is used to be injected into the FDM 3D printer in the form of a paste and inject a molded article, wherein the composition for the FDM 3D printer comprises:
a ceramic powder including CaO and SiO₂; and
a binder solution.

2. The composition for the FDM 3D printer according to claim 1, **characterized in that** the ceramic powder further includes one selected from the group consisting of MgO, CaF₂, P₂O₅, B₂O₃, and a combination thereof.

3. The composition for the FDM 3D printer according to claim 1, **characterized in that** the CaO is included in an amount of 20 to 60% by weight, based on the total weight of the ceramic powder.

4. The composition for the FDM 3D printer according to claim 1, **characterized in that** the SiO₂ is included in an amount of 15 to 40% by weight, based on the total weight of the ceramic powder.

5. The composition for the FDM 3D printer according to claim 2, **characterized in that** the P₂O₅ is included in an amount of 6 to 20% by weight, based on the total weight of the ceramic powder.

6. The composition for the FDM 3D printer according to claim 1, **characterized in that** the mixing ratio of the ceramic powder and the binder solution is 3:7 to 9:1 by weight.

7. The composition for the FDM 3D printer according to claim 1, **characterized in that** the binder solution includes a binder and a solvent, wherein the binder is selected from the group consisting of sugars, gelatine, dibasic calcium phosphate, corn (maize), starch, pregelatinized starch, acacia, xanthan gum, tragacanth, gelatine, alginic acid, polyethylene glycol, polyvinyl alcohol, polyvinylcaprolactam, polymethacrylates, polyvinylpyrrolidone (PVP), polyvinylpyrrolidone-vinyl acetate (PVP-VA), polyvinylcaprolactam-polyvinyl acetate-polyethylene glycol, methacrylic acid-ethyl acrylate, polyvinyl acetate, hydroxypropyl methylcellulose (HPMC), methyl cellulose, ethyl cellulose, hydroxypropyl cellulose (HPC), hydroxyethyl cellulose (HEC), sodium carboxymethyl cellulose, and a combination thereof.

8. The composition for the FDM 3D printer according to claim 7, **characterized in that** the solvent is selected from the group consisting of water, C₁ to C₄ alcohol, and a combination thereof.

9. The composition for the FDM 3D printer according to claim 7, **characterized in that** the binder is cellulose series and is contained in an amount of 0.5 to 5% by weight, based on the total weight of the binder solution.

10. A molded article manufactured by the composition for the FDM 3D printer according to claim 1.

11. The molded article according to claim 10, **characterized in that** the molded article is manufactured by injecting the composition for the FDM 3D printer by the FDM 3D printer, and then subjecting the injected composition to a sintering process, wherein the sintering process comprises the steps of:
heating the injected material to 800 to 1200 °C;
holding the final heating temperature for 160 to 200 minutes; and
cooling the heated material to 10 to 35 °C after the holding step.

12. The molded article according to claim 11, **characterized in that** the heating step is the step of heating the injected material at a rate of 0.01 to 0.8 °C/min.

13. The molded article according to claim 11, **characterized in that** the cooling step is the step of cooling the heated material at a rate of -0.8 to -0.01 °C/min.
